# EUROPÄISCHE PATENTSCHRIFT

(11) **EP 2 380 726 B1**
(45) Veröffentlichungstag und Bekanntmachung des Hinweises auf die Patenterteilung: **15.07.2015**
(21) Anmeldenummer: 11002593.9
(22) Anmeldetag: 29.03.2011
(51) Int. Cl.: B65B 51/22, B29C 65/06, B65B 51/14, B29C 65/22, B29C 65/72

(54) **Verpackungsmaschine mit oszillierendem Siegelwerkzeug**
Packaging machine with oscillating sealing tool
Machine d'emballage dotée d'un outil de scellage oscillant

(30) Priorität: 26.04.2010 DE 102010018288
(43) Veröffentlichungstag der Anmeldung: 26.10.2011
(73) Patentinhaber: MULTIVAC Sepp Haggenmüller GmbH & Co KG, 87787 Wolfertschwenden (DE)
(72) Erfinder: Richter, Tobias, 87700 memmingen (DE); Ehrmann, Elmar, 87730 Bad Grönenbach (DE); Spix, Guido, 89079 Ulm (DE)
(74) Vertreter: Grünecker Patent- und Rechtsanwälte PartG mbB

(56) Entgegenhaltungen:
- DE-A1-102005 017 570
- FR-A1- 2 416 781
- US-A- 3 454 450

## Beschreibung

Die Erfindung bezieht sich auf eine Verpackungsmaschine gemäß dem Oberbegriff des Anspruchs 1.

Eine Kontamination eines Folienbeutels oder Kunststoffverpackung durch das Füllgut ist in vielen Abpackprozessen, speziell beim Verpacken von Lebensmitteln, nur schwer zu vermeiden. Vor allem bei Verpackungsprozessen, die nicht automatisierte Ablaufschritte bei der Befüllung des Packstoffes mit dem Packgut beinhalten, ergeben sich die meisten Probleme. Solche Prozessschritte sind in hohem Maße bei Kammermaschinen bzw. Kammer-Bandmaschinen zu beobachten. Packstoffe, die bei dieser Maschinenart zum Einsatz kommen, sind in der Regel Kunststoffbeutel. Die Befüllung erfolgt dabei durch Bedienpersonal, welche größtmöglichste Sorgfalt beweisen müssen, um die Siegelnahtflächen nicht zu verschmutzen. Weiter muss berücksichtigt werden, dass auch beim Abpacken von Lebensmitteln eine hohe Prozessgeschwindigkeit erreicht werden soll: Zum Einen aufgrund wirtschaftlicher Aspekte, zum Anderen speziell beim Verpacken von Lebensmitteln auch aufgrund der Verderblichkeit der Ware.

Ein anderer Grund, der eine Vermeidung der Verunreinigungen erschwert, ist die Form des Packstoffes. Während bei Verpackungsmaschinen für Kunststoffschalen ein automatischer Abfüllprozess technisch gut umsetzbar ist, kann eine Befüllung von Kunststoffbeuteln für die Versiegelung in Kammermaschinen nur schwer automatisiert werden. Auch ist die Gefahr, dass die Siegelnahtfläche durch das Füllgut verunreinigt wird, bei Beuteln ungleich höher als bei Schälen, sei es durch manuelle oder automatische Befüllung. Da das zu verpackende Produkt aufgrund der Form des Beutels sehr nahe an die Siegelnahtfläche herankommt oder an ihr vorbeigeführt werden muss, ist eine Verunreinigung dieser Fläche nur schwer zu verhindern. Außerdem können die Siegelnahtflächen beim Befüllen von Schalen durch speziell angepasste Abdeckvorrichtungen besser geschützt werden.

Das Hauptproblem, welches durch die Benetzung der Siegelnahtfläche durch artfremde Stoffe auftritt, ist, dass die spätere Siegelnaht nicht die gewünschte Festigkeit aufweist bzw. Undichtigkeiten oder Leckagen besitzt. Sind zu große Produktrückstände im Siegelnahtbereich vorhanden, werden dadurch die molekularen Bewegungen in der Kunststoffschmelze beim Siegelvorgang behindert.

Die Auswirkung von Produktrückständen in der Siegelnaht lässt sich prinzipiell ähnlich erklären wie die Wirkung des Peelsystems. Durch die Einschlüsse von Produktrückständen in der Siegelnaht sind die Siegelschichten nicht vollflächig miteinander verbunden. Je nach Anzahl und Größe dieser Einschlüsse ergibt sich dadurch eine verringerte Siegelnahtfestigkeit, bis hin zur Undichtigkeit. Die Naht neigt dazu, zwischen der Siegelschicht und den Produktrückständen aufzureißen. Im Gegensatz zum Peelsystem ist dies aber hier unerwünscht.

Nicht alle Produkte, die verpackt werden, sind gleichzeitig ein Problem für die Dichtigkeit und Festigkeit der Siegelnaht. Es gibt auch unproblematische Verunreinigungen, die den Siegelprozess nicht negativ beeinflussen. Die Erfahrungen mit diesem Problem haben gezeigt, dass u. a. die Konsistenz bzw. die Viskosität des Füllgutes entscheidend ist. Je dünnflüssiger ein Füllgut ist, desto unproblematischer ist der Siegelprozess, da es beim Siegeln durch einen vorhandenen Siegeldruck aus dem Schmelzbereich gedrängt werden kann. Stark adhäsive Verunreinigungen, hochviskose Produkte sowie pulverförmiges Packgut verursachen beim Verschließen der Verpackung durch eine Siegelnaht häufiger Probleme. Auch die Zusammensetzung des Füllgutes ist ausschlaggebend.

Beispielsweise beeinträchtigt Fleischsaft den Siegelprozess sehr stark. Da Fleischsaft in den meisten Fällen niedrigviskos ist, sollte er leicht aus der Siegelzone gedrängt werden können. Betrachtet man jedoch den Aufbau von Fleisch und somit auch Fleischsaft, so stellt man fest, dass er zu einem großen Teil aus Proteinen besteht. Befinden sich diese Proteine während des Siegelvorganges in einer großen Anzahl in der Siegelschicht, so können die Makromoleküle der Siegelschicht des Packstoffes nicht genügend Verknüpfungen eingehen. Aufgrund der unterschiedlichen Struktur der Proteine und der Makromoleküle der Schmelze ist eine Bindungsfähigkeit zwischen ihnen nicht oder nur sehr schwach vorhanden und beeinflusst damit sehr negativ die Siegelnahtfestigkeit.

Bei Verunreinigungen durch sehr kleine Partikel, die nicht vollflächig die Siegelzone benetzen, kann das Ergebnis durch eine breitere Siegelnaht verbessert werden. Bei ausgeprägten Verschmutzungen über große Flächen der Siegelnaht bewirkt diese Maßnahme meist keine Verbesserung. Bekannt sind Siegelprofile, die die Verschmutzung aus dem Siegelbereich drängen. Sie stellen eine zweckmäßige Lösung dar. Mit Oval-, Dreieck- oder Halbrundprofilen wird versucht, unerwünschte Rückstände während des Siegelns aus der Fügezone zu entfernen.

Ebenfalls ist es Stand der Technik, zum Siegeln Ultraschalltechnik einzusetzen. Beim Ultraschallschweißen werden eventuelle Verunreinigungen der Siegelnaht durch die entstehenden Vibrationen während des Siegelns aus dem Siegelnahtbereich gedrängt. Hierbei ist die Bewegungsrichtung orthogonal zur Siegelebene ausgeführt. Ultraschall findet heute Anwendung in Siegelwerkzeugen von Schlauchbeutelmaschinen, Standbeutelmaschinen sowie zum Verschluss von Bechern und Tuben. Im Bereich evakuierter Verpackungen oder Verpackungen mit modifizierter Atmosphäre ist der Einsatz von Ultraschalltechnik sehr aufwendig und kostenintensiv.

Aus der FR 2 416 781 A1 ist eine Schlauchbeutelmaschine bekannt, bei der das Verschließen des Schlauches mittels eines Pressdrucks und einer alternierenden Relativbewegung der beiden Schlauchinnenflächen im Verschweißbereich erfolgt. Die DE 10 2005 017 570 A1 offenbart eine Vibrationsschweißanlage für thermoplastische Fügeteile mit einem schwingungsbeweglichen Werkzeug.

Aufgabe der vorliegenden Erfindung ist es, eine Verpackungsmaschine zur Verfügung zu stellen, bei der die vorstehend beschriebenen Nachteile beseitigt werden können.

Diese Aufgabe wird gelöst durch eine Verpackungsmaschine mit den Merkmalen des Anspruchs 1. Vorteilhafte Weiterbildungen der Erfindung sind in den Unteransprüchen angegeben.

Die erfindungsgemäße Verpackungsmaschine, nämlich eine Kammer- bzw. Kammerbandmaschine, beinhaltet eine Siegeleinrichtung zum Verschließen von Kunststofffolien wie Beuteln, Schalen oder tief gezogenen Behältern, wobei die Siegeleinrichtung ein Siegelwerkzeugoberteil und ein Siegelwerkzeugunterteil aufweist. Bei Kammermaschinen sind das Siegelwerkzeugoberteil und das Siegelwerkzeugunterteil als Balken ausgeführt. Dabei ist wenigstens das Siegelwerkzeugoberteil oder das Siegelwerkzeugunterteil in einer annähernd parallel zur Siegelfläche bzw. Siegelnaht liegenden Ebene oszillierend ausgeführt. Diese Ebene ist vorzugsweise orthogonal zur Schließbewegung und Kraftrichtung zum Klemmen von zwei Folienlagen, die miteinander zu verschweißen sind.

Durch eine Relativbewegung des Siegelwerkzeugoberteiles zum Siegelwerkzeugunterteil bzw. zu den zwei Folienlagen werden Produktrückstände, die sich im Bereich der zu erzeugenden Siegelnaht befinden, herausgedrängt oder in Kombination mit Hitze in der Siegelnaht eingeschlossen. Dies führt zu einer dichten und geschlossenen Verpackung und zu einer höheren Siegelnahtfestigkeit.

Des Weiteren sind die Polymere der Folienlagen viskoelastisch. Durch eine Scherbeanspruchung der Makromoleküle durch eine Schwingungsanregung sinkt die Viskosität der Schmelze. Bei niedriger Viskosität können sich Ketten von Molekülen an den Fremdpartikeln in der Schmelze vorbeibewegen, diese umschließen und somit eine ausreichend starke Verbindung mit den Molekülen der anderen Siegelschicht eingehen.

Die Schwingungsanregung unterstützt somit den thermischen Siegelprozess. Durch die zusätzliche Energieeinbringung der Reibung wird der Siegelprozess unterstützt. Durch die Verringerung der Viskosität bei einer Scherbeanspruchung ist davon auszugehen, dass sich die Moleküle der Schmelze bereits bei niedrigeren Temperaturen vermischen und vernetzen. Somit kann die Siegeltemperatur in Abhängigkeit von Siegeldruck, Siegelzeit und Folieneigenschaften reduziert werden und dabei die Energieeffizienz der Verpackungsmaschine erhöht werden.

Mit Ende der Schwingungsanregung steigt durch den Wegfall der Scherbeanspruchung die Schmelzviskosität temperaturunabhängig steil an. Dies bewirkt eine wesentlich schnellere Siegelnahtfestigkeit, als sie durch die Abkühlung der Siegelwerkzeuge erfolgen kann und ermöglicht somit eine kürzere Fixierzeit der Folien durch die Siegelwerkzeuge.

In vorteilhafter Weise ist die Schwingungsrichtung linear oder kreisförmig. Die lineare Schwingung ist bevorzugt bei Siegelschienen von Kammermaschinen einsetzbar. Die kreisförmige Schwingung ist besonders vorteilhaft bei Siegelwerkzeugen von Tiefziehverpackungsmaschinen und Schalenverschließmaschinen einsetzbar, da hierbei geschlossene, meist rechteckförmige, Siegelnähte ausgeführt werden und durch die kreisförmige Bewegung für alle Bereiche der Siegelnaht Richtungskomponenten vorhanden sind, um eine Scherbeanspruchung zu erzielen, und Produktrückstände aus dem Bereich der Siegelnaht verdrängen oder die Vermischung erhöhen zu können.

Für die erfindungsgemäße Verpackungsmaschine sind Schwingungsfrequenzen im Bereich von 5 Hz bis 500 Hz und einem Bereich für die Schwingungsamplitude von 0,1 mm bis 1,0 mm vorzugsweise vorzusehen. Besonders vorteilhaft ist der Bereich für die Frequenz von 10 Hz bis 50 Hz. Dies ermöglicht den Einsatz von Standardmaterial der Beutel, Folien oder Schalen.

Hierbei ist das Produkt aus der Frequenz und der Amplitude ist in einem Bereich von 4 mm/s bis 12 mm/s besonders geeignet

In der erfindungsgemäßen Verpackungsmaschine ist es möglich, unter Vakuum oder modifizierter Atmosphäre Verpackungen, durch Verschließen herzustellen. Dies ist eine Grundvoraussetzung beim Einsatz im Bereich der Verpackung von Lebensmitteln.

Die Schwingung wenigstens eines Teils des Siegwerkzeuges in der erfindungsgemäßen Verpackungsmaschine ist mechanisch anregbar ausgeführt. Neben einem motorischen Antrieb mit einer Kurvenscheibe sind auch Piezoaktoren oder Tauchspulen einsetzbar. Die Erfindung ist nicht auf diese Erzeuger beschränkt, es sind weitere denkbar, die entsprechend für die oben genannten Bereiche der Schwingungsfrequenz und der Schwingungsamplitude geeignet sind.

Im Folgenden wird ein vorteilhaftes Ausführungsbeispiel der Erfindung anhand einer Zeichnung näher dargestellt.
- Figur 1: zeigt eine schematische Seitenansicht einer Siegeleinrichtung mit Siegel schienen einer erfindungsgemäßen Verpackungsmaschine in geöffneter Stellung,
- Figur 2: zeigt eine schematische Seitenansicht einer Siegeleinrichtung wie Fig. 1 während des Siegelprozesses,
- Figur 3: zeigt eine schematische Seitenansicht einer Siegeleinrichtung wie Fig. 2 in wieder geöffneter Stellung,
- Figur 4: zeigt eine schematische Seitenansicht einer Siegeleinrichtung für Verpackungen mit einer geschlossenen Siegelnaht einer Verpackungsmaschine nach einem nicht zur Erfindung gehörenden Beispiel in geöffneter Stellung,
- Figur 5: zeigt eine schematische Draufsicht einer Siegeleinrichtung nach dem nicht zur Erfindung gehörenden Beispiel aus Fig. 4,
- Figur 6: zeigt eine schematische Seitenansicht einer Siegeleinrichtung für Verpackungen mit einer geschlossenen Siegelnaht einer Verpackungsmaschine nach einem nicht zur Erfindung gehörenden Beispiel während des Siegelprozesses,
- Figur 7: zeigt verschiedene Ausbildungen von Siegelwerkzeugober- und unterteilen nach nicht zur Erfindung gehörenden Beispielen in Kombination.

Gleiche Komponenten sind in den Figuren durchgängig mit gleichen Bezugszeichen versehen.

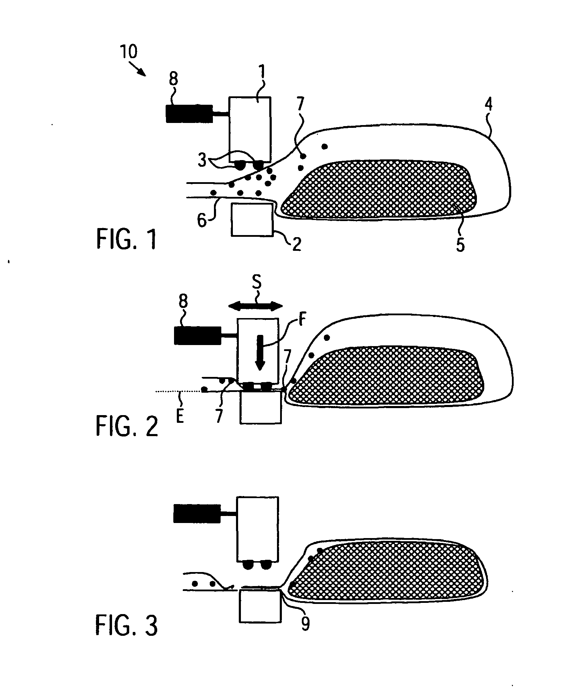

In Fig. 1 ist in einer schematischen Seitenansicht die Siegeleinrichtung 10 einer Kammermaschine oder Kammerbandmaschine mit einem oberen Siegelbalken 1 und einem unteren Siegelbalken 2 dargestellt. Am oberen Siegelbalken 1 sind zwei Siegeldrähte 3 in Form von einem Doppelrundprofil angeordnet. Ein Beutel 4 aus einer Kunststofffolie ist mit einem Produkt 5 gefüllt, wobei sich im Bereich des Beutelhalses 6 Produktrückstände 7, z.B. Fleischsaft, Blut, Soße oder Pulver, befinden. Der Beutelhals 6 wird zwischen die Siegelbalken 1, 2 eingelegt und der nicht dargestellte Deckel der Kammermaschine geschlossen. Das Kammerinnere wird evakuiert, um den Sauerstoffgehalt im Beutel 4 zu minimieren.

Anschließend führt der obere Siegelbalken 1 wie in Fig. 2 dargestellt eine Bewegung hin zum unteren Siegelbalken 2 aus. Dabei erzeugt der obere Siegelbalken 1 mit den Siegeldrähten 3 eine Kraft F auf beide Seiten des Beutelhalses 6 gegen den unteren Siegelbalken 2.

Dabei werden Produktrückstände 7 zum Teil im Bereich der zu siegelnden Fläche bzw. Siegelnaht 9 eingeschlossen.

Mittels einem Schwingungsanreger 8, der an dem oberen Siegelbalken 1 angebracht ist, führt der obere Siegelbalken 1 eine oszillierende Bewegung S quer zur Siegelnaht 9 aus. Eine Siegelebene E ist definiert durch die Siegelfläche, in der der Beutelhals 6 durch den oberen Siegelbalken 1 gegen den unteren Siegelbalken 2 gedrückt wird. Die oszillierende Schwingung S liegt in einer zur Ebene E parallelen Ebene. Die Zeit der Schwingungsanregung ist über den Bediener in eine nicht dargestellte Steuerung eingebbar und in einem Rezepturspeicher speicherbar und wiederabrufbar. Produktrückstände 7, die sich am Rand des Siegelbereiches befinden, werden nach beiden Seiten, in Richtung Beutelhals 6 und Produkt 5, aus dem Siegelbereich herausgedrängt. Produktreste 7, die sich noch weiter im Siegelbereich befinden, werden durch die Scherbewegung des oberen Siegelbalkens 1 so verdrängt, dass sich die beiden Folienseiten des Beutels 4 miteinander so um die Produktrückstände 7 verschmelzen, so dass eine dichte Verpackung erzeugt wird, deren Siegelnaht 9 die für die jeweilige Anwendung geforderte Siegelnahtfestigkeit aufweist, wie in Fig. 3 dargestellt. Nach dem Verschmelzen der Folien bzw. des Beutelhalses 6 wird die Scherbewegung beendet. Danach wird die Klemmung aufgehoben, indem der obere Siegelbalken 1 in die obere Position zurückbewegt.

Bei der oben beschriebenen Ausführung einer Siegeleinrichtung 10 ist es auch möglich, dass der untere Siegelbalken 2 oder beide Siegelbalken 1, 2 mittels eines oder mehrerer Schwingungsanreger 8 die Scherbewegung ausführen.

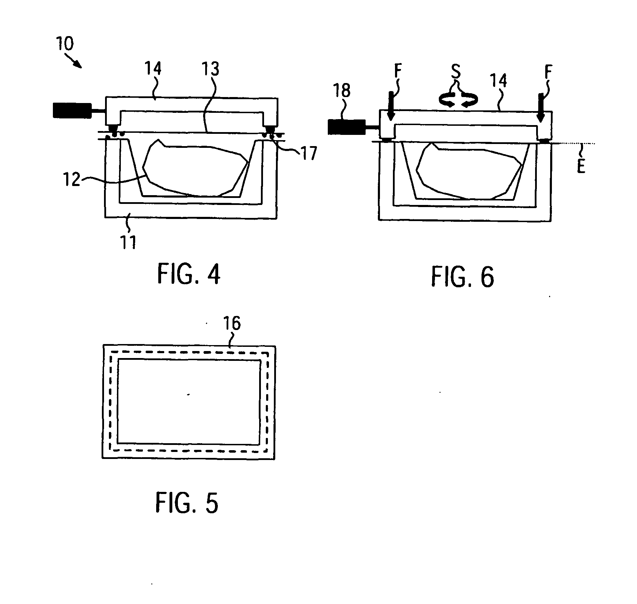

In Fig. 4 ist eine Verpackungsmaschine nach einem nicht zur Erfindung gehörenden Beispiel mit einer Siegeleinrichtung 10 in einer schematischen Seitenansicht dargestellt, wie sie typischerweise in Schalenversiegelungsmaschinen oder Tiefziehverpackungsmaschinen für geschlossene Siegelnähte eingesetzt wird. Ein Siegelwerkzeugunterteil 11 nimmt die Schale 12 oder das tiefgezogene Packungsunterteil 12 auf und eine Deckelfolie 13 ist zugeführt. An einem Werkzeugoberteil 14 ist eine Siegeldichtung 15 angebracht. Hier sind verschiedene Konturen denkbar, die in Abhängigkeit zur Anwendung z.B. Folieneigenschaften angepasst sind.

In Fig. 5 ist eine Siegelnaht 16 in geschlossener Form als Draufsicht auf das Werkzeugunterteil 11 nach dem nicht zur Erfindung gehörenden Beispiel erkennbar.

Im weiteren Prozess wird das Siegelwerkzeugoberteil 14 nach unten gegen das Siegelwerkzeugunterteil 11 bewegt. Dabei wird eine Kraft F erzeugt und damit die Deckelfolie 13 an die Schale 12 gedrückt. Die im Bereich der Siegelnaht 16 befindlichen Produktreste 17 werden zum Teil, wie in Fig. 6 für eine Verpackungsmaschine nach einem nicht zur Erfindung gehörenden Beispiel dargestellt, eingeschlossen. Ein am Werkzeugoberteil 14 angebrachter Schwingungsanreger 18 erzeugt eine Schwingung S und eine Scherbewegung in einer Ebene parallel zur Siegelebene E, die durch die Siegelnaht definiert ist. Die Schwingung S ist kreisförmig und besitzt somit Richtungskomponenten, die in Draufsicht für jede Richtung der Siegelnaht 16 eine Scherbewegung quer zum Siegelnahtverlauf aufweist. Es sind weitere Varianten denkbar wie zwei überlagerte Schwingungen S, erzeugt durch einen oder mehrere Schwingungsanreger 18, die jeweils nur eine lineare Schwingung S ausführen, beispielsweise orthogonal zueinander.

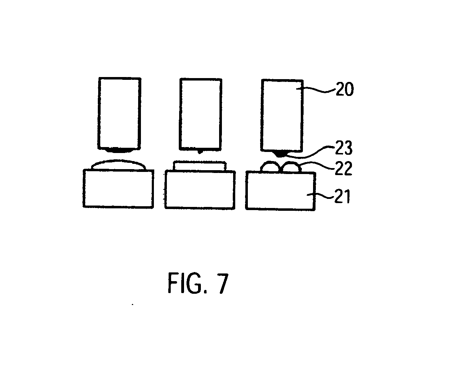

In Fig. 7 sind drei Varianten von Kombinationen von Siegelwerkzeugoberteilen 20 und Siegelwerkzeugunterteilen 21 nach nicht zur Erfindung gehörenden Beispielen dargestellt. Es sind auch weitere Kombinationen denkbar, die durch ein Vertauschen, z.B. von oben und unten oder seitlich, der einzelnen Konturen 22, 23 entstehen.

Dabei ist es unerheblich, ob nur eine oder beide Konturen beheizt sind, um die Folien 12, 13 miteinander zu verschmelzen.

Die Schwingung kann auch bereits mit dem Klemmvorgang der Folien einsetzen und für die Verdrängung von Produktrückständen aus dem Siegelbereich sorgen, noch bevor der Wärmeeintrag für das Verschweißen der Folien einsetzt.

## Patentansprüche

1. Verpackungsmaschine in Form einer Kammermaschine oder Kammerbandmaschine, mit einer Siegeleinrichtung (10) zum Verschweißen von Kunststofffolien, wobei die Siegeleinrichtung (10) ein Siegelwerkzeugoberteil (1, 14) und ein Siegelwerkzeugunterteil (2, 11) aufweist, die dazu ausgebildet sind, beim Verschweißen in den Kunststofffolien eine eine Siegelebene (E) definierende Siegelfläche zu erzeugen, wobei wenigstens das Siegelwerkzeugoberteil (1, 14) oder das Siegelwerkzeugunterteil (2, 11) in einer Ebene, die annähernd parallel zur Siegelfläche (E) ist, in einer Schwingung (S) anregbar ist, wobei ferner an dem als oberer Siegelbalken ausgebildeten Siegelwerkzeugoberteil (1) zwei Siegeldrähte (3) in Form von einem Doppelrundprofil angeordnet sind.

2. Verpackungsmaschine nach Anspruch 1, **dadurch gekennzeichnet, dass** die Schwingung (S) kreisend oder linear ausgeführt ist.

3. Verpackungsmaschine nach einem der vorigen Ansprüche, **dadurch gekennzeichnet, dass** die Schwingung (S) mit einer Frequenz von 5 Hz bis 500 Hz erzeugbar ist.

4. Verpackungsmaschine nach Anspruch 1 oder 2, **dadurch gekennzeichnet, dass** die Schwingung (S) mit einer Frequenz von 10 Hz bis 50 Hz erzeugbar ist.

5. Verpackungsmaschine nach einem der vorigen Ansprüche, **dadurch gekennzeichnet, dass** die Schwingung (S) eine Amplitude von 0,1 mm bis 1,0 mm aufweist.

6. Verpackungsmaschine nach einem der vorigen Ansprüche, **dadurch gekennzeichnet, dass** bei der Schwingung das Produkt aus der Frequenz und der Amplitude einen Bereich von 4 bis 12 mm/s aufweist.

7. Verpackungsmaschine nach einem der vorigen Ansprüche, **dadurch gekennzeichnet, dass** die Verpackungsmaschine dazu konfiguriert ist, unter Vakuum oder modifizierter Atmosphäre Verpackungen durch Verschließen herzustellen.

8. Verpackungsmaschine nach einem der vorigen Ansprüche, **dadurch gekennzeichnet, dass** die Schwingung (S) mechanisch angeregt ist.

## Claims

1. Packaging machine in the form of a chamber machine or a belted chamber machine, with a sealing device (10) for welding plastic films, wherein the sealing device (10) has a sealing-tool upper part (1, 14) and a sealing-tool lower part (2, 11), which are configured to produce a sealing surface defining a sealing plane (E) in the plastic films when welding, wherein at least the sealing-tool upper part (1, 14) or the sealing-tool lower part (2, 11) can be excited to a vibration (S) in a plane approximately parallel to the sealing surface (E), wherein further at the sealing-tool upper part (1), which is implemented as an upper sealing bar, two sealing wires (3) are arranged in the shape of a double-round profile.

2. Packaging machine according to Claim 1, **characterised in that** the vibration (S) is executed in a circular manner or linearly.

3. Packaging machine according to one of the previous claims, **characterised in that** the vibration (S) can be generated at a frequency from 5 Hz to 500 Hz.

4. Packaging machine according to Claim 1 or 2, **characterised in that** the vibration (S) can be generated at a frequency from 10 Hz to 500 Hz.

5. Packaging machine according to one of the previous claims, **characterised in that** the vibration (S) has an amplitude from 0.1 mm to 1.0 mm.

6. Packaging machine according to one of the previous claims, **characterised in that** for the vibration the product of the frequency and the amplitude has a range from 4 to 12 mm/s.

7. Packaging machine according to one of the previous claims, **characterised in that** the packaging machine is configured to manufacture packages by sealing under vacuum or modified atmosphere.

8. Packaging machine according to one of the previous claims, **characterised in that** the vibration (S) is mechanically excited.

## Revendications

1. Machine d'emballage sous la forme d'une machine à chambre ou d'une machine à tapis et chambre, comprenant un dispositif de scellage (10) pour le soudage de feuilles de matière plastique, machine dans laquelle le dispositif de scellage (10) comprend une partie supérieure d'outillage de scellage (1, 14) et une partie inférieure d'outillage de scellage (2, 11), qui sont configurées pour engendrer dans les feuilles de matière plastique, lors du soudage, une surface de scellage définissant un plan de scellage (E),
dans laquelle au moins la partie supérieure d'outillage de scellage (1, 14) ou la partie inférieure d'outillage de scellage (2, 11) peut être soumise à une excitation en vibration (S) dans un plan, qui est approximativement parallèle au plan de scellage (E),
dans laquelle par ailleurs, sur la partie supérieure d'outillage de scellage (1) réalisée en tant que barre de scellage supérieure, sont agencés deux fils de scellage (3) sous la forme d'un profilé rond double.

2. Machine d'emballage selon la revendication 1, **caractérisée en ce que** la vibration (S) est effectuée de manière circulaire ou linéaire.

3. Machine d'emballage selon l'une des revendications précédentes, **caractérisée en ce que** la vibration (S) peut être produite avec une fréquence de 5 Hz à 500 Hz.

4. Machine d'emballage selon la revendication 1 ou la revendication 2, **caractérisée en ce que** la vibration (S) peut être produite avec une fréquence de 10 Hz à 50 Hz.

5. Machine d'emballage selon l'une des revendications précédentes, **caractérisée en ce que** la vibration (S) présente une amplitude de 0,1 mm à 1,0 mm.

6. Machine d'emballage selon l'une des revendications précédentes, **caractérisée en ce que** concernant la vibration, le produit de la fréquence et de l'amplitude se situe dans une plage de 4 à 12 mm/s.

7. Machine d'emballage selon l'une des revendications précédentes, **caractérisée en ce que** la machine d'emballage est configurée pour fabriquer des emballages par fermeture, sous vide ou sous atmosphère modifiée.

8. Machine d'emballage selon l'une des revendications précédentes, **caractérisée en ce que** la vibration (S) est obtenue par excitation mécanique.
